# EUROPÄISCHE PATENTSCHRIFT

(11) **EP 0 761 332 B1**
(45) Veröffentlichungstag und Bekanntmachung des Hinweises auf die Patenterteilung: **12.05.1999**
(21) Anmeldenummer: 96250174.8
(22) Anmeldetag: 13.08.1996
(51) Int. Cl.: B21B 38/10, G01B 11/14

(54) **Messsystem zur Erfassung eines Spaltes eines Walzenpaares**
Measuring device for determining the gap of a pair of rolling rolls
Dispositif de mesure pour déterminer l'emprise d'une paire de cylindres de laminage

(30) Priorität: 31.08.1995 DE 19533584
(43) Veröffentlichungstag der Anmeldung: 12.03.1997
(73) Patentinhaber: MANNESMANN Aktiengesellschaft, 40213 Düsseldorf (DE)
(72) Erfinder: Hansen, Manfred, 40597 Düsseldorf (DE)
(74) Vertreter: Meissner, Peter E., Dipl.-Ing.

(56) Entgegenhaltungen:
- DD-A- 156 578
- DE-A- 1 548 871
- DE-C- 4 203 469

## Beschreibung

Die Erfindung betrifft ein Meßsystem zur Erfassung eines Spaltes eines Walzenpaares durch Abtasten der Lage der Walzenballenenden auf der dem Walzspalt abgewandten Seite, mit einer an einer Tragkonstruktion angeordneten, eine höhenverstellbare optische Abtastvorrichtung tragenden Hebelstange und einem auf dem Walzballen aufruhend angeordneten Positionselement, das in dem optischen Strahlengang zwischen einem Sender und einem Empfänger der Abtastvorrichtung angeordnet ist und dessen Lageänderung von der Abtastvorrichtung erfaßbar ist.

Aus der DE 42 03 469 C 2 ist ein Meßsystem bekannt bei dem die Lage der Walzenballenenden der Stützwalzen berührungslos mittels an Hebelstangen angeordneter optischer Abtastvorrichtungen erfaßt wird, wobei sich der Referenzpunkt neben dem Walzgerüst befindet. Die Abtastvorrichtungen sind vorzugsweise optische Geräte auf Laserbasis, d. h. beim Sender handelt es sich um einen Laser, der Empfänger ist üblicherweise eine Photodiode. Alternativ dazu kann der optische Sender auch als Diodenzeilenkamera ausgebildet sein, die mit einer monochromen Lichtquelle versehen ist. Eine genaue Erfassung der Walzenballenenden wird durch Gleitschuhe erreicht, die mit einer definierten Meßkante versehen auf die Walzenballenenden gleitend aufsetzbar sind. Die Abtastvorrichtung ist höhenverstellbar und somit an den Durchmesser der Walzensätze anpaßbar.

Während der Messung liegen die Gleitschuhe im Scheitelbereich auf den Walzenballenenden der Stützwalzen auf, so daß die Gleitschuhe vertikalen Verschiebungen der Walzenballenenden unmittelbar folgen. Die am gegenüberliegenden Ende des Gleitschuhs ausgebildete definierte Meßkante befindet sich während der Messung im optischen Strahlengang zwischen dem Sender und dem Empfänger. Bei einem Laser als Sender wird der Laserstrahl beispielsweise zu 50 % von der Meßkante des Gleitschuhs abgedeckt, d. h. nur 50 % der Lichtintensität gelangen auf den Fotoempfänger. Eine Verschiebung der Meßkante des Gleitschuhs, bedingt durch eine Verschiebung des entsprechenden Walzenballenendes, bewirkt eine Erhöhung oder eine Verringerung der vom Fotoempfänger gemessenen Lichtintensität, je nach dem, ob sich das Walzenballenende nach oben oder nach unten bewegt, wobei die Lageänderung der Walzenballenenden einer Änderung der Walzspaltöffnung folgt. Mit diesem Meßverfahren soll eine hochgenaue berührungslose Messung der Walzspaltöffnung auch bei Warmwalzwerken möglich sein. Dabei soll der Meßort "Walzenballenende" eine geeignete Stelle sein, an der günstige Umfeldbedingungen herrschen, so daß ein ungestörter Meßwert zu erwarten ist. Die optische Erfassung soll dabei weitere Meßungenauigkeiten ausschließen, die bei berührend arbeitenden Meßgeräten nicht zu vermeiden sind.

Nachteilig ist bei diesem insbesondere optischen Meßverfahren, das die bei Warmwalzwerken herrschenden extrem ungünstigen Umfeldbedingungen eine optische Erfassung der Lage der Walzenballenenden nahezu unmöglich machen. Insbesondere der bei der Walzenkühlung entstehende Wasserdampf verfälscht die Meßwerte und verhindert somit eine genaue Messung. Dieselbe Wirkung haben die während des Walzprozesses auftretenden Stäube. Dämpfe und Stäube schlagen sich einerseits auf den optischen Flächen der Abtastvorrichtung nieder, so daß eine regelmäßige Reinigung in kurzen zeitlichen Abständen erforderlich ist. Andererseits führen Dämpfe und Stäube im Strahlengang zwischen Sender und Empfänger zu einer spontan schwankenden Verringerung der transmittierten Lichtintensität. Diese Schwankungen überlagern sich dem Meßsignal und führen zu einer Verfälschung des Meßwertes für die Spaltöffnung. Eine Korrektur der Meßwerte ist hierbei nicht möglich, da die starken Schwankungen der Umfeldbedingungen zufälliger Natur sind.

Ein weiteres Meßsystem ist aus der DE 15 48 871 A1 bekannt. Bei diesem kommt ein System von Linsen und Umlenkspiegeln zum Einsatz. Dieses System ist nicht nur aufwendig, sondern auch relativ störanfällig.

Es ist Aufgabe der vorliegenden Erfindung, ein Meßsystem zu schaffen, mit dem insbesondere bei Warmwalzwerken möglichst genau und störungsfrei die Walzspaltöffnung erfaßt werden kann.

Gelöst wird diese Aufgabe mit den Merkmalen des Patentanspruchs 1. Vorteilhafte Ausgestaltungen ergeben sich aus den Unteransprüchen.

Das erfindungsgemäße Meßsystem hat zunächst den Vorteil, daß das Meßergebnis nicht mehr durch ungünstige Umfeldbedingungen, insbesondere Wasserdampf und Staub, wie sie in der Regel bei Warmwalzwerken vorliegen, verfälscht wird. Die optische Erfassung der Lageänderungen der Walzenballenenden schließt selbstverständlich weitere Meßungenauigkeiten aus, die bei berührend arbeitenden Meßgeräten nicht zu vermeiden sind.

Eine Bauart des Meßsystems sieht vor, daß der Sender und der Empfänger der Abtastvorrichtung in einem gemeinsamen Gehäuse angeordnet sind und die Gehäusewand von dem Positionselement frei beweglich durchdringbar ist. Um das Eindringen von Staub, Dampf und dergleichen in den Innenraum zu verhindern, wird ein Gas mit Überdruck in den Innenraum eingeleitet. Auf diese Weise wird sichergestellt, daß die Messung unter definierten optischen Bedingungen durchgeführt wird; insbesondere wird überhaupt erst eine genaue optische Messung ermöglicht.

Vorzugsweise ist vorgesehen, daß das Positionselement über einen Gelenkhebel am Gehäuse der Abtastvorrichtung angelenkt ist. Dadurch ist die Abtastvorrichtung eine als Ganzes verschiebbare Einheit, was die Positionierung zu Beginn der Messung als auch bei jedem Walzenwechsel vereinfacht. Eine Erhöhung der Meßgenauigkeit wird insbesondere dadurch erreicht, daß der Gelenkhebel als Parallelogrammhebel ausgebildet ist, da durch diese spezielle Hebelform ein Verkippen des Positionselements gegenüber der vertikalen Richtung während der Messung verhindert wird. Zweckmäßigerweise ist das Positionselement eine Positionsplatte mit einer scharfen Kante, die senkrecht auf einer Gleitplatte angeordnet ist, die wiederum gleitend auf dem Meßobjekt aufliegt.

In einer Ausgestaltung der Gehäusewand der Abtastvorrichtung ist es vorgesehen, im unteren mittleren Bereich des Gehäuses eine Öffnung vorzusehen, die ein mit Übermaß (gegenüber dem Positionselement) ausgebildeter Schlitz ist, der von dem Positionselement frei beweglich durchdringbar ist. Als Gas wird zweckmäßigerweise trockene saubere Luft durch eine in der Gehäusewand vorgesehene Öffnung in den Innenraum des Gehäuses eingeleitet; abgeleitet wird das Gas insbesondere durch die Schlitzöffnung.

Bei dem Sender handelt es sich vorzugsweise um einen Laser mit einem entsprechenden Strahldurchmesser, wobei der Laser insbesondere eine Laserdiode sein kann. Als Empfänger ist zweckmäßigerweise ein Fotoempfänger oder alternativ dazu eine Diodenzeilenkamera vorgesehen.

Dehnungen des Walzenständers und dergleichen gehen nicht in das Meßergebnis verfälschend ein, wenn die Tragkonstruktion daneben am Fundament befestigt ist. Eine derartige Befestigung der Tragkonstruktion verfügt über eine solche mechanische Stabilität, wie sie für die optische Erfassung der Meßwerte erforderlich ist.

Anhand des in der Zeichnung dargestellten Ausführungsbeispiels wird die Erfindung nachfolgend beispielhaft beschrieben. Die Figuren zeigen:
- Fig. 1: eine Vorderansicht des Meßsystems zur Erfassung eines Spaltes eines Walzenpaares und
- Fig. 2: ein Querschnitt des Meßsystems nach Fig. 1 durch die Positionsmeßplatte.

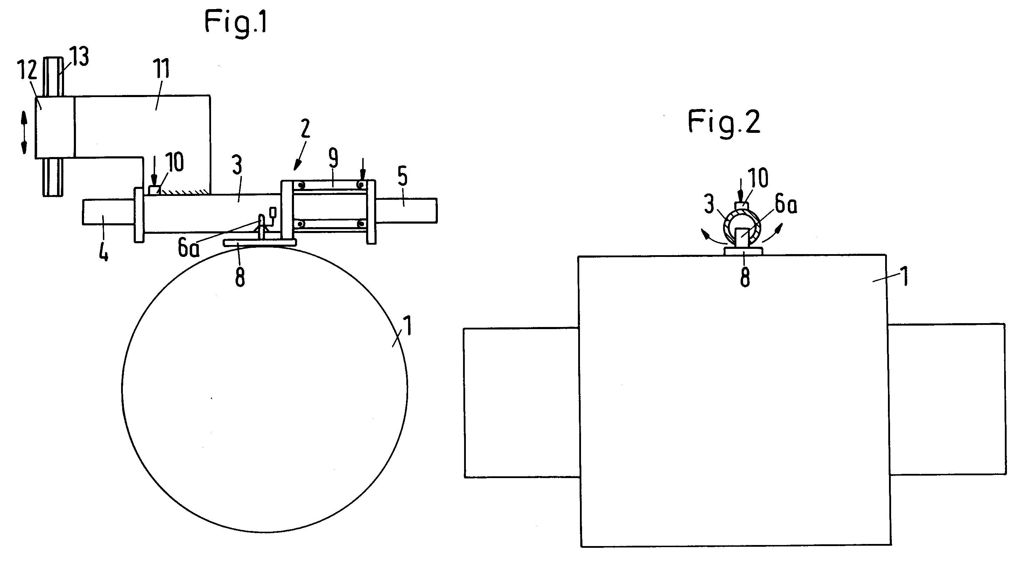

Das Prinzip der Erfindung ist in den Figuren schematisch verdeutlicht. In Fig. 1 ist eine Vorderansicht des Meßsystems zur Erfassung eines Spaltes eines Walzenpaares dargestellt. Mit 1 ist die Stützwalze des Walzengerüsts bezeichnet, die darunter angeordnete Arbeitswalze ist nicht dargestellt. Arbeitswalze und Stützwalze sind beispielsweise bei einem Vierwalzengerüst einander gegenüberliegend paarweise ausgeführt, wobei der Abstand der Arbeitswalzen den Walzspalt definiert. Oberhalb der Stützwalze ist die optische Abtastvorrichtung 2 mit dem Gehäuse 3 angeordnet. Das Gehäuse 3, das im Ausführungsbeispiel rohrförmig ausgeführt ist, ist an seinen Stirnseiten mit einer Befestigungseinheit für eine Laserdiode 4 und an der gegenüberliegenden Stirnseite mit einer Befestigungseinheit für einen Fotoempfänger 5 verschlossen. Der optische Strahlengang innerhalb des Gehäuses 3 verläuft horizontal und wird teilweise durch eine im Strahlengang angeordnete Positionsmeßplatte 6a unterbrochen. Maximale Empfindlichkeit der Abtastvorrichtung liegt dann vor, wenn 50 % des wirksamen Strahldurchmessers durch die Positionsmeßplatte 6a abgedeckt werden. Die Positionsmeßplatte ist senkrecht zum Strahlengang angeordnet und durchdringt die Gehäusewand durch eine im unteren Scheitelbereich des Gehäuses 3 mit Übermaß ausgebildete Schlitzöffnung 7 frei beweglich. Außerhalb des Gehäuses 3 ist die Positionsmeßplatte 6a senkrecht auf einer Gleitplatte 8 befestigt, die wiederum über einen Gelenkhebel 9 am Gehäuse 3 schwenkbar angelenkt ist. Zusätzlich kann der Gelenkhebel 9 mit einer Feder versehen sein, die den Gelenkhebel 9 und damit die Gleitplatte in Fig. 1 nach unten zieht. Um das Eindringen von Dampf, Staub und dergleichen in das Gehäuse 3 zu verhindern, ist das Gehäuse 3 mit einer Öffnung 10 versehen, durch die ein Gas in den Innenraum des Gehäuses 3 mit Überdruck einleitbar ist. Das Gas ist zweckmäßigerweise trockene, saubere Luft.

Wie ebenfalls aus Fig. 1 ersichtlich, ist die optische Abtastvorrichtung 2 über eine Hebelstange 11 an einer Verschiebeeinrichtung 12 zur vertikalen Verschiebung der Abtastvorrichtung 2 befestigt. Die Verschiebeeinrichtung 12 ist an einer in Fig. 1 nur angedeuteten Tragkonstruktion 13 angeordnet, die auf dem Fundament aufgesetzt ist. Dadurch ist die optische Abtastvorrichtung 2 höhenverstellbar und somit an den Durchmesser der Walzensätze anpaßbar. Gleichzeitig befindet sich der Referenzpunkt neben dem Walzgerüst, was die Meßgenauigkeit des Meßsystems zur Erfassung der Breite des Walzspalts erhöht.

Fig. 2 zeigt einen Querschnitt des Meßsystems nach Fig. 1 am Ort der Positionsmeßplatte, wobei bei diesem Ausführungsbeispiel die optische Abtastvorrichtung mittig zur Walzenlänge angeordnet ist. Selbstverständlich kann die Abtastvorrichtung an einer beliebigen Stelle längs der Arbeitswalze 1, also auch an den Walzenballenenden, angeordnet sein, wobei die Anordnung an den Walzenballenenden die bevorzugte Anordnung ist.

Zum Betrieb der Meßvorrichtung wird diese in der Anordnung nach Fig. 1 mit Hilfe der Verschiebeeinrichtung 12 von oben aus der Ruheposition langsam nach unten in die Arbeitsposition gefahren. Weiterhin wird durch die Öffnung 10 trockene, saubere Luft oder ein Inertgas in den Innenraum des Gehäuses mit leichtem Überdruck eingeleitet. Der nach unten geschwenkte Gelenkhebel 9 bewirkt, daß die Positionsmeßplatte 6a den wirksamen Strahldurchmesser nicht oder nur wenig abdeckt. Kommt die Gleitplatte 8 auf der Stützwalze 1 zum Aufliegen, bewegt sich die Positionsmeßplatte 6a langsam in den Strahlengang. Die Abtastvorrichtung 2 hat die optimale Arbeitsposition erreicht, wenn durch die Positionsmeßplatte 50 % des effektiven Strahldurchmessers abgedeckt wird; das Ausgangssignal des Fotoempfängers 5 ist bei dieser Position auf 50 % seines ursprünglichen Wertes zurückgegangen. Ändert sich die vertikale Lage der Stützwalze 1 nach oben oder unten, so verschiebt sich die Positionsmeßplatte 6a entsprechend im Strahlengang, wodurch mehr bzw. weniger Licht auf den Fotoempfänger 5 fällt. Bei kleinen horizontalen Verschiebungen der Positionsmeßplatte 6a ist die am Fotoempfänger 5 anliegende Lichtintensitätsänderung proportional zur Änderung der Spaltbreite des Arbeitswalzenpaares.

### Bezugszeichenliste:

- 1.: Stützwalze
- 2.: Abtastvorrichtung
- 3: Gehäuse
- 4: Laserdiode
- 5: Fotoempfänger
- 6: Positionsmeßplatte
- 7: Schlitzöffnung
- 8: Gleitplatte
- 9: Gelenkhebel
- 10: Schlitzöffnung
- 11: Hebelstange
- 12: Verschiebeeinrichtung
- 13: Tragkonstruktion

## Patentansprüche

1. Meßsystem zur Erfassung eines Spaltes eines Walzenpaares durch Abtasten der Lage der Walzenballenenden auf der dem Walzspalt abgewandten Seite, mit einer an einer Tragkonstruktion (13) angeordneten, eine höhenverstellbare optische Abtastvorrichtung (2) tragenden Hebelstange (11) und einem auf dem Walzballen aufruhend angeordneten Positionselement (6), das in dem optischen Strahlengang zwischen einem Sender (4) und einem Empfänger (5) der Abtastvorrichtung (2) angeordnet ist und dessen Lageänderung von der Abtastvorrichtung (2) erfaßbar ist,
**dadurch gekennzeichnet,**
daß der auf Laserbasis ausgebildete Sender (4) und der als Photoempfänger ausgebildete Empfänger (5) in einem gemeinsamen Gehäuse (3) angeordnet sind, in dessen Innenraum Gas mit Überdruck einleitbar ist und
daß das über einen Gelenkhebel (9) am Gehäuse (3) vertikal beweglich angelenkten Positionselement aus einer auf dem Walzballen aufliegenden Gleitplatte (8) und einer senkrecht auf dieser angeordneten Positionsmeßplatte (6a) besteht, die frei beweglich durch eine in der Gehäusewand ausgebildete Schlitzöffnung in den optischen Strahlengang zwischen Sender und Empfänger hineinragt und diesen mit einer an der Positionsmeßplatte (6a) ausgebildeten scharfen Meßkante mindestens teilweise abdeckt.

2. Meßsystem nach Anspruch 1,
**dadurch gekennzeichnet,**
daß der Gelenkhebel (9) ein Parallelogrammhebel ist.

3. Meßsystem nach Anspruch 1 und 2,
**dadurch gekennzeichnet,**
daß der Empfänger (5) eine Photodiode ist.

4. Meßsystem nach Anspruch 1 und 2,
**dadurch gekennzeichnet,**
daß der Empfänger (5) eine Diodenzeilenkamera ist.

5. Meßsystem nach Anspruch 1 und 2,
**dadurch gekennzeichnet,**
daß das in den Innenraum des Gehäuses einleitbare Gas trockene Luft ist.

6. Meßsystem nach Anspruch 1 und 2,
**dadurch gekennzeichnet,**
daß das in den Innenraum des Gehäuses einleitbare Gas ein Inertgas ist.

7. Meßsystem nach Anspruch 1 bis 6,
**dadurch gekennzeichnet,**
daß die Tragkonstruktion (13) am Fundament des Walzgerüsts befestigt ist.

## Claims

1. A measuring system for determining the gap between a pair of rolls by scanning the position of the roll barrel ends on the side remote from the roll gap, comprising a lever rod (11), which is arranged on a supporting structure (13) and carries a height-adjustable optical scanning device (2), and a position element (6), which rests on the roll barrel and is arranged in the optical path between a transmitter (4) and a receiver (5) of the scanning device (2) and any alteration in the position of which may be detected by the scanning device (2),
characterised in that
the laser-based transmitter (4) and the receiver (5), which takes the form of a photoreceiver, are arranged in a common housing (3), into the inside of which gas may be introduced at a pressure above atmospheric and in that the position element, which is coupled vertically movably to the housing (3) via an articulated lever (9) consists of a sliding plate (8) resting on the roll barrel and a position measurement plate (6a) arranged perpendicularly thereon, which latter projects unhindered through a slot opening in the housing wall into the optical path between transmitter and receiver and covers said path at least partially with a sharp measuring edge formed on the position measurement plate (6a).

2. A measuring system according to claim 1,
characterised in that
the articulated lever (9) is a parallelogram lever.

3. A measuring system according to claim 1 and claim 2, characterised in that
the receiver (5) is a photodiode.

4. A measuring system according to claim 1 and claim 2, characterised in that
the receiver (5) is a diode line scanning camera.

5. A measuring system according to claim 1 and claim 2, characterised in that
the gas which may be introduced into the inside of the housing is dry air.

6. A measuring system according to claim 1 and claim 2, characterised in that
the gas which may be introduced into the inside of the housing is an inert gas.

7. A measuring system according to any one of claims 1 to 6, characterised in that
the supporting structure (13) is attached to the base of the roll stand.

## Revendications

1. Système de mesure pour déterminer une emprise d'une paire de cylindres par détection de la position des extrémités des corps des cylindres du côté opposé à l'emprise des cylindres, comportant une barre de levier (11) agencée sur une construction de support (13) et portant un dispositif de détection optique (2) réglable en hauteur et un élément de positionnement (6) agencé en reposant sur le corps de cylindre, qui est agencé dans le trajet optique des rayons entre un émetteur (4) et un récepteur (5) du dispositif de détection (2) et dont la modification de position peut être déterminée par le dispositif de détection (2),
caractérisé en ce que l'émetteur (4) réalisé sous forme de laser et le récepteur (5) réalisé sous forme de récepteur photoélectrique sont agencés dans un boîtier commun (3) dans l'espace interne duquel peut être introduit du gaz sous pression, et en ce que l'élément de positionnement articulé de façon verticalement mobile sur le boîtier (3) par l'intermédiaire d'un levier d'articulation (9) est constitué d'une plaque de glissement (8) reposant sur le corps de cylindre et d'une plaque de mesure de position (6a) agencée perpendiculairement à celle-ci, qui pénètre, de façon librement mobile, à travers une ouverture en forme de fente réalisée dans la paroi du boîtier dans le trajet optique des rayons entre l'émetteur et le récepteur et recouvre au moins partiellement celui-ci par un bord de mesure effilé réalisé sur la plaque de mesure de position (6a).

2. Système de mesure selon la revendication 1,
caractérisé en ce que le levier articulé (9) est un parallélogramme articulé.

3. Système de mesure selon les revendications 1 et 2,
caractérisé en ce que le récepteur (5) est une diode photoélectrique.

4. Système de mesure selon les revendications 1 et 2,
caractérisé en ce que le récepteur (5) est une caméra à lignes de diodes.

5. Système de mesure selon les revendications 1 et 2,
caractérisé en ce que le gaz pouvant être introduit dans l'espace interne du boîtier est de l'air sec.

6. Système de mesure selon les revendications 1 et 2,
caractérisé en ce que le gaz pouvant être introduit dans l'espace interne du boîtier est un gaz inerte.

7. Système de mesure selon les revendications 1 à 6,
caractérisé en ce que la construction de support (13) est fixée sur le socle de la cage de laminoir.
